# EUROPÄISCHE PATENTANMELDUNG

(11) **EP 4 763 001 A2**
(43) Veröffentlichungstag der Anmeldung: **24.06.2026**
(21) Anmeldenummer: 25210637.2
(22) Anmeldetag: 23.10.2025
(51) Int. Cl.: A47F 1/00, B25H 3/06, B23Q 1/03, B25H 3/04, A47F 5/08

(54) **WERKSTÜCKTABLETT EINES WERKSTÜCKMAGAZINS**

(30) Priorität: 19.12.2024 DE 102024138904
(71) Anmelder: Condor Custom Solutions GmbH & Co. KG, 33154 Salzkotten (DE)
(72) Erfinder: Rusche, Sebastian, 59590 Geseke (DE); Schulte, Dominik, 33129 Delbrück (DE)
(74) Vertreter: Konrad, Stephan

(57) **Zusammenfassung**

Es wird eine optimierte Vorlage von Werkstückrohlingen (2) auf einem Werkstücktablett eines Werkstückmagazins vor einer mechanischen Bearbeitungsvorrichtung, mit auf einer Trägerplatte (1) schnell, einfach und sehr präzise und mit hoher Wiederholgenauigkeit bei größtmöglicher Funktionssicherheit manuell und optimal verteilt und sicher vorgelegten Werkstückrohlingen (2) zur Verfügung gestellt, was dadurch erzielt wird, dass eine Verfahren zur computerunterstützten Tablettbestückung des Werkstücktablettes angewandt wird und die Oberfläche der Trägerplatte (1) mit einer Vielzahl von in regelmäßigen Reihen und Spalten angeordneten abstands- und größengleicher Öffnungen (3) versehen ist sowie mit einer Vielzahl von Werkstückabstandshaltern (4-7), die sich mit von ihren Unterseiten (8) nach unten in Öffnungen (3) erstreckenden Rastkörpern (9) ausgestattet sind und die Werkstückabstandshalter (4-7) nach oben gerichtete Auflagerflächen (10-13) für eck- oder randseitige Teilaufstandsflächen der Werkstückrohlinge (2) aufweisen sowie sich dazwischen vertikal erstreckende Abstandsblöcke (31-34) oder Randblöcke (30), die ihrerseits seitliche Positionierungsflächen (14-20) für die Werkstückrohlinge (2) aufweisen.

## Beschreibung

Die Erfindung betrifft ein Werkstücktablett eines Werkstückmagazins einer mechanischen Bearbeitungsvorrichtung mit auf einer Trägerplatte manuell vorgelegten Werkstückrohlingen und ein Verfahren zur computerunterstützten Tablettbestückung gemäß den Oberbegriffen des ersten und des dreizehnten Patentanspruches.

Es ist ein Verfahren und eine Vorrichtung zur teilautomatisierten Beschickung einer Werkzeugmaschine bekannt, DE 10 2004 054 247 C5, bei denen nach Vorlage eines Werkstückes auf eine Transportvorrichtung dieses in eine Werkstückaufnahmeposition transportiert wird, anschließend von einem Werkstückgreifer ergriffen und davon in den Wirkbereich einer Bearbeitungsmaschine bewegt wird, woraufhin dort die Bearbeitung des Werkstückes erfolgt.

Nachteilig hieran ist der mechanische Aufwand für den Transport eines Werkstückrohlings bis zur Bearbeitungsmaschine.

Aufgabe der Erfindung ist es, eine optimierte Vorlage von Werkstückrohlingen vor einer Bearbeitungsmaschine zur Verfügung zu stellen, wobei eine Vorlage auf einem Werkstücktablett eines Werkstückmagazins schnell, einfach und sehr präzise und mit hoher Wiederholgenauigkeit bei größtmöglicher Funktionssicherheit durchführbar sein soll, ebenso wie eine maximale Anzahl von Werkstückrohlingen optimal verteilt und sicher auf dem Werkstücktablett angeordnet sein sollen.

Die Lösung dieser Aufgabe ergibt sich in Verbindung mit den Merkmalen der Oberbegriffe des ersten und des 13. Patentanspruches erfindungsgemäß im Zusammenhang mit deren kennzeichnenden Merkmalen dadurch, dass die Oberfläche der Trägerplatte des Werkstücktabletts mit einer Vielzahl von in regelmäßigen Reihen und Spalten abstands- und größengleich angeordneter Öffnungen versehen ist, sowie mit einer Vielzahl von Werkstückabstandshaltern, die sich mit von ihren Unterseiten nach unten in die Öffnungen erstreckenden Rastkörpern ausgestattet sind und die Werkstückabstandshalter nach oben gerichtete Auflagerflächen für eck- oder randseitige Teilaufstandsflächen der Werkstückrohlinge aufweisen sowie sich dazwischen vertikal erstreckende Abstandsblöcke oder Randblöcke, die seitliche Positionierungsflächen für die Werkstückrohlinge aufweisen. Die Werkstückabstandshalter bilden quasi zusammen mit der Trägerplatte des Werkstücktabletts einen Steckmechanismus, sodass mehrere zu bearbeitende Werkstückrohlinge in einfachster Art und Weise in vorgewählten Abständen zu mehreren auf einem Werkstücktablett positionierbar sind, wobei deren Abstand zueinander stets korrekt aufrechterhalten bleibt, sodass ein Roboterarm diese Werkstückrohlinge nacheinander ergreifen und einem Bearbeitungsprozess, wie etwa einem Fräsprozess, zuführen kann, bei dem die Werkstückrohlinge in einen Schraubstock einer Fräse eingespannt und bearbeitet werden. Anschließend können die bearbeiteten Werkstückrohlinge mittels des Roboterarms zurück auf das Werkstücktablett gesetzt oder aber anderweitig aus der Fräse weiterbefördert werden. Dadurch, dass die Werkstückrohlinge zum Teil auf den Werkstückabstandshaltern aufstehen, werden diese vorteilhafterweise zusätzlich zu der Verrastung der Rastkörper in den Öffnungen des Werkstücktabletts durch ihr Eigengewicht fixiert.

Weitere vorteilhafte Ausgestaltungen des Gegenstandes der Erfindung ergeben sich mit und in Kombination aus den nachfolgenden Unteransprüchen.

Gemäß einer besonders bevorzugten Ausführungsform der Erfindung schließen sich den Positionierungsflächen nach oben Montageschrägen an, sodass bei einer manuellen Bestückung der Trägerplatte des Werkstücktabletts mit mehreren Werkstückrohlingen auf und zwischen die Werkstückabstandshalter eine wesentliche Erleichterung erzielt wird, insbesondere bei schwereren Werkstückrohlingen, die dadurch sofort in ihre korrekte Position auf der Trägerplatte des Werkstücktabletts eingeführt werden.

Um etwa die Außenecke eines Werkstückrohlinges sicher zu führen, besitzt ein Werkstückabstandshalter zwei zueinander gerichtete Positionierungsflächen, wobei die Innenecke zwischen den winkligen Positionierungsflächen vorteilhafterweise dem Winkel einer Außenecke eines Werkstückrohlinges entspricht, sodass dieser dort spielfrei gehalten werden kann.

Bevorzugterweise ist des Weiteren zwischen zwei winkligen Positionierungsflächen eines Werkstückabstandshalters eine Teilkreisausnehmung zur Aufnahme einer Eckkante der Außenecke eines Werkstückrohlinges vorgesehen, sodass dieser nicht an seiner Ecke, sondern großflächiger an den Seitenflächen der Ecke gehalten wird, sodass die Werkstückabstandshalter und die Werkstückrohlinge nur mit geringen Flächendrücken statt mit hohen Punkt- oder Linienbelastungen beaufschlagt werden.

Dadurch, dass die Werkstückabstandshalter nach oben gerichtete Auflagerflächen für die Werkstückrohlinge aufweisen, wird vorteilhafterweise das Eigengewicht der Werkstückrohlinge dazu genutzt, die Werkstückabstandshalter mit ihren Rastkörpern in den Öffnungen zu halten, ohne dass hierzu weitere aufwendige mechanische Verrastungen vorgesehen werden müssten, die aber auch vorgesehen werden können, etwa insbesondere bei kleinen Eckhaltern, die zusätzlich auch mit Durchgangsöffnungen versehen sein können, durch die hindurch Schrauben hindurchgeführt werden können, um den Werkstückabstandshalter über ein Schraubengewinde auf der Oberfläche der Trägerplatte befestigen zu können.

Vorteilhafterweise sind die Werkstückabstandshalter in verschiedenen Varianten ausgestaltet, etwa als Einfach-Eckhalter, Zweifach-Seitenhalter oder Drei-, Vier- oder Mehrfach-Mittelhalter, sodass die Abstände der Werkstückrohlinge neben- und hintereinander auf einem Werkstücktablett beliebig vorherbestimmbar aufgesetzt werden können.

Bevorzugterweise besitzen die Abstandsblöcke oder die Randblöcke der Werkstückabstandshalter maximal eine bis zur Hälfte des Höhenmaßes der Werkstückrohlinge aufweisende Höhe, sodass sie auch bei einer hohen Beschleunigung eines das Werkstücktablett aufnehmenden und zu einem Platz in einem Werkstückmagazin bewegenden Roboterarmes nicht kippen können.

Gemäß eine bevorzugten Ausgestaltung der Erfindung sind alle Werkstückabstandshalter von Werkstückrohlingen mit identischen oder ähnlichen Abmessungsbereichen ihrer Aufstandsflächen als separate Haltergruppe in einer Farbe eingefärbt sind, die anders ist als für Haltergruppen von Werkstückabstandshaltern von Werkstückrohlingen mit abweichenden identischen oder ähnlichen Abmessungsbereichen. Hierdurch lassen sich die von einer Person auf das Werkstücktablett aufzusetzenden Werkstückabstandshalter sehr einfach auseinandergehalten und fehlerfrei erkennen und verarbeiten.

Die Rastkörper der Werkstückabstandshalter sind dabei vorzugsweise kreiszylindrisch ausgebildet und die Öffnungen als runde Sackloch- oder Durchgangsbohrungen ausgeführt, die den gleichen Durchmesser wie die Rastkörper aufweisen, wobei auch Varianten von Werkstückmagazinen mit kreuzweise als Schlitzen ausgebildete Öffnungen und als Kreuze ausgebildete Rastkörper oder andere Varianten mit weiteren Stecksystemen Anwendung finden können.

Vorteilhafterweise sind die Rastkörper einteilig, sie können jedoch auch mehrteilig, mit oder ohne Rastnasen für mit oder ohne Hinterschnitte versehene Öffnungen ausgebildet sein, sodass sich die erfinderische Trägerplatte des Werkstücktabletts einer Vielzahl von Anforderungen anpassen lässt.

Besonders bevorzugt ist eine Ausführungsform der Trägerplatte des Werkstücktabletts mit Werkstückabstandhaltern, die aus 3D-gedrucktem Material gefertigt sind, wodurch neue Werkstückabstandhalter schnell und einfach an neue Formen von Werkstückrohlingen angepasst werden können, sodass diese stets sicher und positionsgenau auf einem Werkstücktablett aufgesetzt werden können.

Vorteilhafterweise weisen die Werkstückabstandshalter in ihrer Werkstückhalterunterseite Zugriffsausnehmungen auf, die als Montage- oder Demontagehilfe fungieren, ebenso wie diese der Werkstoffeinsparung dienen.

Für das erfinderische neue Verfahren zur computerunterstützten Tablettbestückung eines Werkstücktablettes, welches über seine Software eine Lösung des beschriebenen technischen Problems mit technischen Mitteln liefert, sind die Abmessungen der Trägerplatte und der Öffnungen mit ihrer Anordnung darin in einem programmierbaren Speicher abgelegt, ebenso die Art und Form der Werkstückabstandshalter mit ihren Rastkörpern, Abstandsblöcken und Randblöcken der verschiedenen Haltergruppen, ebenso die möglichen Größenmaße der zu bearbeitenden Werkstückrohlinge, sodass über eine Eingabevorrichtung des Computers nur die Breiten- und Tiefenmaße von aktuell zu bearbeitenden identischen Werkstückrohlingen eingegeben werden müssen, woraufhin das Computerprogramm die optimale Anzahl der Werkstückrohlinge pro Trägerplatte bestimmt, ebenso wie die Haltegruppe und die Auswahl und die Platzierung der verschiedenen Werkstückabstandshalter dieser Haltergruppe, wobei das Ergebnis auf einem technischen Mittel zur Darstellung von Informationen und/ oder einem vorrichtungseigenen Display angezeigt wird, nach welchem dann die Trägerplatte von einer Person von Hand entsprechend mit den berechneten Werkstückabstandshaltern einer Haltergruppe an den vorgegebenen Plätzen und anschließend mit den Werkstückrohlingen bestückt wird.

Für die Bearbeitung hoher Werkstückrohlinge mit einem Höhenmaß größer als ihrem Breiten- und Tiefenmaß wird über die Eingabevorrichtung zusätzlich deren Höhenmaß eingegeben, woraufhin das Computerprogramm vorteilhafterweise eine andere Haltergruppe mit höheren Rand- und Abstandsblöcken auswählt und anzeigt. Dies verhindert bei höheren Querbeschleunigungen eins Roboterarms beim nachfolgenden Umsetzten des Werkstücktabletts das Umkippen der Werkstückrohlinge auf dem Werkstücktablett.

Das Computerprogramm wählt bevorzugt eine Anordnung der Werkstückabstandshalter aus, die symmetrisch einer Mittelachse der Trägerplatte und einer einem Roboterarm zugewandten Grundreihe der Trägerplatte angeordnet sind, da der Roboterarm seitlich in Richtung der Mittelachse an die Trägerplatte ankuppelt und das fertig bestückte Werkstücktablett zu einer Ablage in einem Werkstückmagazin bewegt, um nach Abarbeitung vorhergehender Werkstücktabletts darauf zugreifen zu können. Die gewählte Anordnung minimiert so die auftretenden Hebel- und Biegemomente um eine Ache des Roboterarmes und quer dazu.

Nachfolgend ist ein Ausführungsbeispiel der Erfindung anhand von Zeichnungen näher beschrieben, es zeigen:

### Bezugszeichenliste:

- 1: Trägerplatte
- 2: Werkstückrohling
- 3: Öffnung
- 4: Werkstückabstandshalter
- 5: Werkstückabstandshalter
- 6: Werkstückabstandshalter
- 7: Werkstückabstandshalter
- 8: Unterseite
- 9: Rastkörper
- 10: Auflagerfläche
- 11: Auflagerfläche
- 12: Auflagerfläche
- 13: Auflagerfläche
- 14: Positionierungsfläche
- 15: Positionierungsfläche
- 16: Positionierungsfläche
- 17: Positionierungsfläche
- 18: Positionierungsfläche
- 19: Positionierungsfläche
- 20: Positionierungsfläche
- 21: Teilkreisausnehmung
- 22: Montageschräge
- 23: Montageschräge
- 24: Montageschräge
- 25: Montageschräge
- 26: Montageschräge
- 27: Montageschräge
- 28: Montageschräge
- 29: Durchgangsausnehmung
- 30: Randblock
- 31: Abstandsblock
- 32: Abstandsblock
- 33: Abstandsblock
- 34: Abstandsblock
- 35: Schraubengewinde
- 36: Außenecke
- 37: Zugriffsausnehmung
- 38: Mittelachse
- 39: Grundreihe

- Fig. 1: die Trägerplatte eines Werkstücktabletts mit aufgesetzten Werkstückrohlingen in einer räumlichen Ansicht,
- Fig. 2: ein Werkstückmagazin ähnlich der Fig. 1 ohne Werkstückrohlinge,
- Fig. 3: einen Einfach-Eckhalter in räumlicher Ansicht,
- Fig. 4: den Einfach-Eckhalter der Fig. 3 in einer Draufsicht,
- Fig. 5: einen Zweifach-Seitenhalter in räumlicher Ansicht von schräg oben und
- Fig. 6: den Zweifach-Seitenhalter der Fig. 5 in einer Draufsicht,
- Fig. 7: einen zweiten Zweifach-Seitenhalter in räumlicher Ansicht von schräg vorne,
- Fig. 8: den zweiten Zweifach-Seitenhalter der Fig. 7 in einer Draufsicht,
- Fig. 9: eine Vierfach-Mittelhalter in einer seitlichen 3D-Ansicht und
- Fig. 10: den Vierfach-Mittelhalter der Fig. 9 in einer Draufsicht.

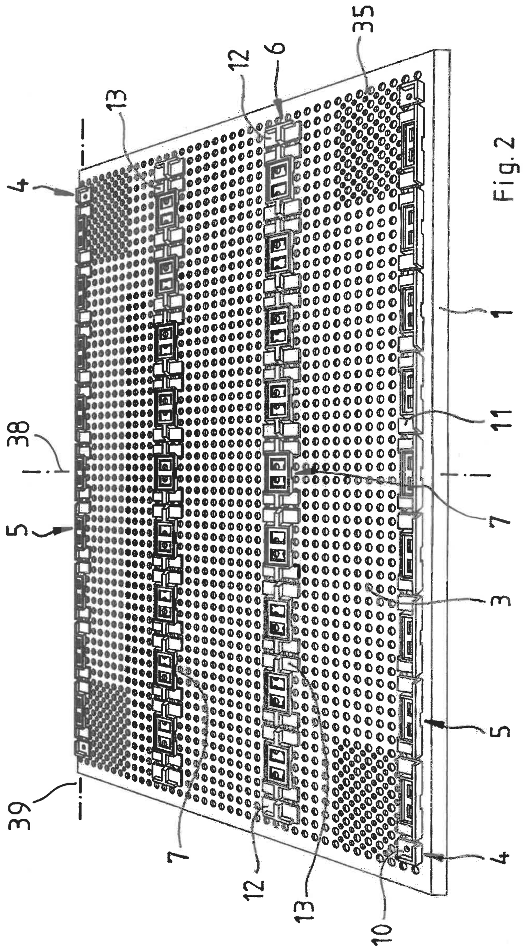

Das Werkstücktablett eines Werkstückmagazins besteht im Wesentlichen, wie in Fig. 2 gezeigt, aus einer Trägerplatte 1 mit einer in seiner Oberfläche in regelmäßigen Reihen und Spalten abstands- und größengleich angeordneter Öffnungen 3, die als Sackloch- oder Durchgangsbohrungen ausgebildet sind, wobei in den vier Eckbereichen der Trägerplatte 1 zwischen den Öffnungen 3 Schraubengewinde 35 zum Befestigen der Werkstückabstandshalter 4-7 angeordnet sein können, die mit Durchgangsöffnungen 29 versehen sein können.

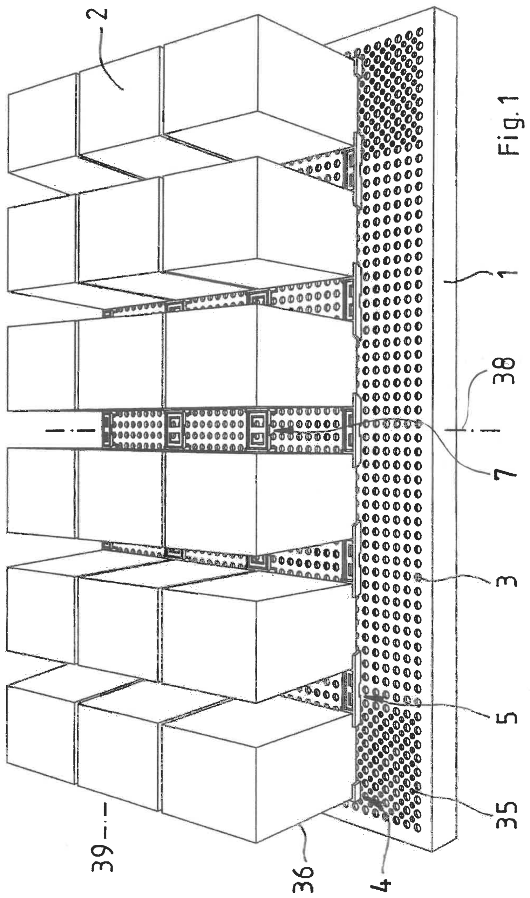

Die Werkstückabstandshalter 4-7 sind in verschiedenen Ausführungsformen ausgebildet, etwa als Einfach-Eckhalter, als Zweifach-Seitenhalter oder als Vierfach-Mittelhalter, sodass, wie in Fig. 1 dargestellt ist, dazwischen aufgesetzte Werkstückrohlinge 2 über ihre eck- oder randseitigen Bereiche ihrer Teilaufstandsflächen sicher und gleichmäßig beabstandet voneinander positioniert sind. Zeichnerisch nicht dargestellt sind Abstandsblöcke (31-34) oder Randblöcke (30) der Werkstückabstandshalter (4-7) mit unterschiedlichen Höhenabmessungen, die sich bis zur Hälfte des Höhenmaßes der Werkstückrohlinge (2) erstrecken können, wahlweise oder erforderlicherweise aber auch höher ausgeführt sein können.

Die Werkstückabstandshalter (4-7) von Werkstückrohlingen (2) mit identischen oder ähnlichen Abmessungsbereichen ihrer Aufstandsflächen und ggf. anderen Höhenabmessungen sind in separate Haltergruppen unterteilt, wobei jede Haltergruppe in einer anderen Farbe eingefärbt ist, was zeichnerisch ebenfalls nicht dargestellt ist.

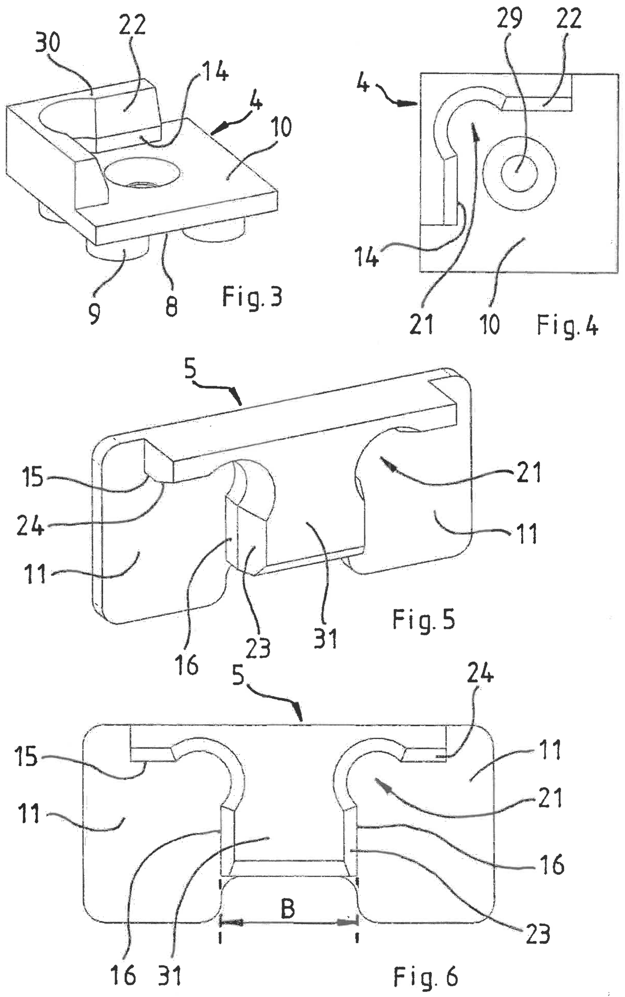

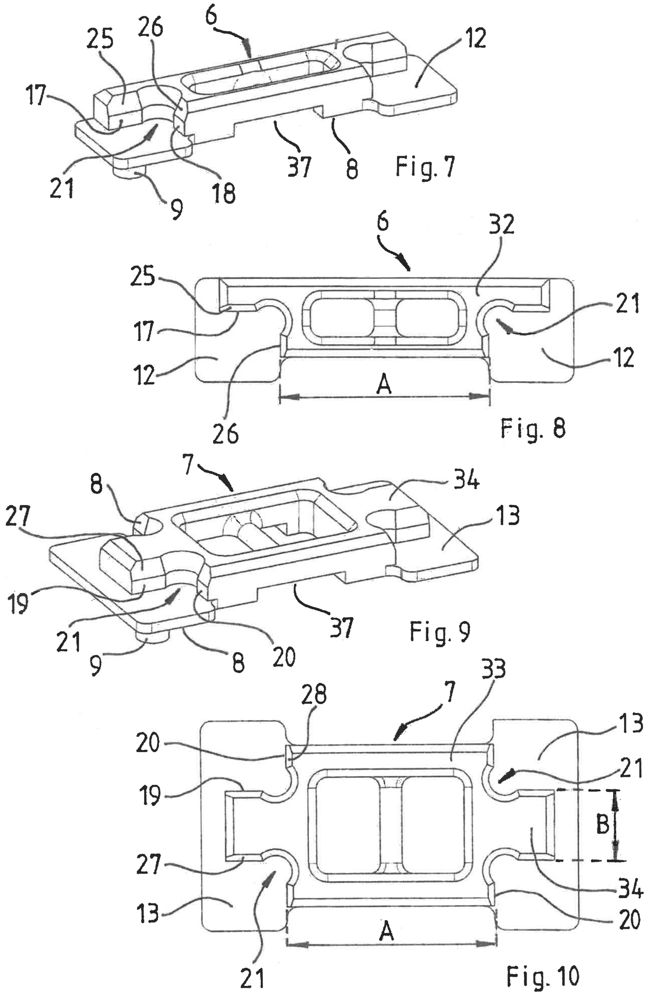

Die Werkstückabstandshalter 4-7 weisen sich von ihren Unterseiten 8 nach unten in die Öffnungen 3 erstreckende Rastkörper 9 auf, die hier kreiszylindrisch ausgebildet sind, wie dies in den Fig. 3, 7 und 9 dargestellt ist, wobei jeweils mindestens zwei solcher Rastkörper 9 an einer Unterseite 8 vorgesehen sind. Zusätzlich können die Unterseiten 8 mit Zugriffsausnehmungen 37 versehen sein, wie in Fig. 7 und 9 gezeigt, die als Demontagehilfe und der Werkstoffeinsparung dienen.

Die Werkstückabstandshalter 4-7 weisen des Weiteren nach oben gerichtete Auflagerflächen 10-13 für eck- oder randseitig Teilaufstandsflächen der Werkstückrohlinge 2 auf, sodass diese mit ihrem Eigengewicht die Werkstückabstandshalter 4-7 fixieren. Die mögliche Ausbildung der Rastkörper 9 in mehrteiliger Form, mit oder ohne Rastnasen, für mit oder ohne Hinterschnitte versehene Öffnungen 3 ist vom Schutzumfang der Patentansprüche mit umfasst.

Zwischen den seitlichen Auflagerflächen 10-13 für die Werkstückrohlinge 2 sind Abstandsblöcke 31-34 oder Randblöcke 30 mit seitlichen Positionierungsflächen 14-20 für die Werkstückrohlinge 2 vorgesehen, wobei die Werkstückabstandshalter 5,6, die als Zweifach-Seitenhalter ausgebildet sind, Abstandsblöcke 31, 32 mit Seitenabständen A, B von parallelen Positionierungsflächen 14-20 ausgestattet sind, die den gleichen Abstand A, B der Positionierungsflächen 14-20 des als Vierfach-Mittelhalters ausgebildeten Werkstückabstandshalter 7 entsprechen, sodass die Werkstückrohlinge 2 in zueinander parallelen, gleich voneinander beabstandeten Reihen und Spalten auf dem Werkstücktablett angeordnet werden können.

Den Positionierungsflächen 14-20 der Werkstückabstandshalter 4-7 schließen sich nach oben gerichtete Montageschrägen 22-28 an, um ein Einsetzen der Werkstückrohlinge 2 zwischen die Werkstückabstandshalter 4-7 zu vereinfachen.

Zwischen zwei zueinander winkligen Positionierungsflächen 4-20 einer Außenecke 36 eines Werkstückrohlinges 2 ist die Innenecke mit einer Teilkreisausnehmung 21 zur Aufnahme einer Eckkante der Außenecke 36 eines Werkstückrohlinges 2 ausgestattet, sodass dieser nicht an seinen Außenecken 36 abgestützt wird, sondern unmittelbar seitlich dieser Ecken, was die mechanische Belastung auf einen Werkstückrohling und auch auf die Werkstückabstandshalter 4-7 reduziert.

Die Werkstückabstandshalter 4-7 sind aus 3D-gedrucktem Material gefertigt, insbesondere aus Kunststoff, und können schnell und günstig anderen Geometrien von Werkstückrohlingen 2 angepasst und neu ausgedruckt werden, wobei ein Mittelhalter beispielsweise auch weniger oder mehr als vier Auflagerflächen aufweisen könnte.

Die Anordnung der Werkstückrohlinge 2 erfolgt dabei symmetrisch einer Mittelachse 38 und ausgehend von einer einem Roboterarm nahen Grundreihe 39 von Öffnungen 3 in der Trägerplatte 1

## Patentansprüche

1. Werkstücktablett eines Werkstückmagazins einer mechanischen Bearbeitungsvorrichtung mit auf einer Trägerplatte (1) manuell vorgelegten Werkstückrohlingen (2), **dadurch gekennzeichnet, dass** die Oberfläche der Trägerplatte (1) mit einer Vielzahl von in regelmäßigen Reihen und Spalten angeordneten abstands- und größengleicher Öffnungen (3) versehen ist sowie mit einer Vielzahl von Werkstückabstandshaltern (4-7), die sich mit von ihren Unterseiten (8) nach unten in Öffnungen (3) erstreckenden Rastkörpern (9) ausgestattet sind und die Werkstückabstandshalter (4-7) nach oben gerichtete Auflagerflächen (10-13) für eck- oder randseitige Teilaufstandsflächen der Werkstückrohlinge (2) aufweisen sowie sich dazwischen vertikal erstreckende Abstandsblöcke (31-34) oder Randblöcke (30), die ihrerseits seitliche Positionierungsflächen (14-20) für die Werkstückrohlinge (2) aufweisen.

2. Werkstücktablett eines Werkstückmagazins nach Anspruch 1, **dadurch gekennzeichnet, dass** sich den Positionierungsflächen (14-20) nach oben Montageschrägen (22-28) anschließen.

3. Werkstücktablett eines Werkstückmagazins nach einem der beiden vorgenannten Ansprüche, **dadurch gekennzeichnet, dass** jeweils zwei Positionierungsflächen (14-20) entsprechend einer Außenecke (36) eines Werkstückrohlings (2) winklig zueinander ausgerichtet sind.

4. Werkstücktablett eines Werkstückmagazins nach Anspruch 3, **dadurch gekennzeichnet, dass** eine Innenecke zwischen zwei winkligen Positionierungsflächen (14-20) mit einer Teilkreisausnehmung (21) zur Aufnahme einer Eckenkante der Außenecke (36) eines Werkstückrohlings (2) ausgestattet ist.

5. Werkstücktablett eines Werkstückmagazins nach einem der vorgenannten Ansprüche, **dadurch gekennzeichnet, dass** die Werkstückabstandshalter (4-7) unterschiedlich als Einfach- Eckhalter (4), Zweifach-Seitenhalter (5,6) oder Drei- oder Mehrfach-Mittelhalter (7) ausgebildet sind.

6. Werkstücktablett eines Werkstückmagazins nach einem der vorgenannten Ansprüche, **dadurch gekennzeichnet, dass** die Abstandsblöcke (31-34) oder Randblöcke (30) der Werkstückabstandshalter (4-7) maximal eine bis zur Hälfte des Höhenmaßes der Werkstückrohlinge (2) aufweisende Höhe besitzen.

7. Werkstücktablett eines Werkstückmagazins nach einem der vorgenannten Ansprüche, **dadurch gekennzeichnet, dass** alle Werkstückabstandshalter (4-7) von Werkstückrohlingen (2) mit identischen oder ähnlichen Abmessungsbereichen ihrer Aufstandsflächen als separate Haltergruppe in einer Farbe eingefärbt sind, die anders ist als für Werkstückabstandshalter (4-7) von Werkstückrohlingen (2) mit abweichenden identischen oder ähnlichen Abmessungsbereichen.

8. Werkstücktablett eines Werkstückmagazins nach einem der vorgenannten Ansprüche, **dadurch gekennzeichnet, dass** die Rastkörper (9) kreiszylindrisch und die Öffnungen (3) als runde Sackloch- oder Durchgangsbohrungen gleichen Durchmessers ausgeführt sind.

9. Werkstücktablett eines Werkstückmagazins nach Anspruch 8, **dadurch gekennzeichnet, dass** die Rastkörper (9) ein- oder mehrteilig, mit oder ohne Rastnasen für mit oder ohne Hinterschnitten versehene Öffnungen (3) ausgebildet sind.

10. Werkstücktablett eines Werkstückmagazins nach einem der vorgenannten Ansprüche, **dadurch gekennzeichnet, dass** die Werkstückabstandshalter (4-7) Durchgangsöffnungen (29) für Schrauben und der Werkstücktablett (1) in seiner Oberfläche Schraubengewinde (35) zur Befestigung der Werkstückabstandshalter (4-7) aufweist.

11. Werkstücktablett eines Werkstückmagazins nach einem der vorgenannten Ansprüche, **dadurch gekennzeichnet, dass** die Werkstückabstandshalter (4-7) aus 3D-gedrucktem Material gefertigt sind.

12. Werkstücktablett eines Werkstückmagazins nach einem der vorgenannten Ansprüche, **dadurch gekennzeichnet, dass** die Werkstückabstandshalter (4-7) an ihrer ebenen Werkstückhalterunterseite (8) mit Zugriffsausnehmungen (37) ausgestattet sind.

13. Verfahren zur computerunterstützten Tablettbestückung eines Werkstücktablettes gemäß einem der vorgenannten Ansprüche, **dadurch gekennzeichnet, dass** die Abmessungen der Trägerplatte (1) und der Öffnungen (3) mit ihrer Anordnung darin in einem programmierbaren Speicher abgelegt sind, ebenso die Art und Form der Werkstückabstandshalter (4-7) mit ihren Rastkörpern (9), Abstandsblöcken (31-34) und Randblöcken (30) der verschiedenen Haltergruppen, ebenso die möglichen Größenmaße der zu bearbeitenden Werkstückrohlinge (2) und dass über eine Eingabevorrichtung nur die Größenmaße von aktuell zu bearbeitenden identischen Werkstückrohlingen (2) eingegeben wird, woraufhin das Computerprogramm die optimale Anzahl der Werkstückrohlinge (2) pro Trägerplatte (1) bestimmt, ebenso wie die Haltegruppe und die Auswahl und die Platzierung der verschiedenen Werkstückabstandshalter (4-7), wobei das Ergebnis auf einem technischen Mittel zur Darstellung von Informationen und/ oder einem Display angezeigt wird, nach welchem die Trägerplatte (1) von einer Person per Hand entsprechend mit den berechneten Werkstückabstandshaltern (4-7) einer Haltergruppe an den vorgegebenen Plätzen und anschließend mit den Werkstückrohlingen (2) bestückt wird.

14. Verfahren nach Anspruch 13, **dadurch gekennzeichnet, dass** für die Bearbeitung hoher Werkstückrohlinge (2) mit einem Höhenmaß größer als ihrem Breiten- und Tiefenmaß über die Eingabevorrichtung zusätzlich deren Höhe eingegeben wird und dass das Computerprogramm eine Haltergruppe mit höheren Randblöcken (30) und Abstandsblöcken (31) auswählt und anzeigt.

15. Verfahren nach Anspruch 14 oder 15, **dadurch gekennzeichnet, dass** das Computerprogramm eine Anordnung der Werkstückabstandshalter (4-7) auswählt, die symmetrisch einer Mittelachse (38) der Trägerplatte (1) und einer einem Roboterarm zugewandten Grundreihe (39) der Trägerplatte (1) zugeordnet sind.
